# EUROPÄISCHE PATENTSCHRIFT

(11) **EP 1 992 849 B1**
(45) Veröffentlichungstag und Bekanntmachung des Hinweises auf die Patenterteilung: **21.12.2016**
(21) Anmeldenummer: 07009700.1
(22) Anmeldetag: 15.05.2007
(51) Int. Cl.: F16J 15/32

(54) **Dichtungsanordnung**
Sealing arrangement
Arrangement d'étanchéité

(43) Veröffentlichungstag der Anmeldung: 19.11.2008
(73) Patentinhaber: Carl Freudenberg KG, 69469 Weinheim (DE)
(72) Erfinder: Bock, Eberhard, Dr., 69509 Mörlenbach (DE); Heiland, Marc, Dr., 67549 Worms (DE)

(56) Entgegenhaltungen:
- EP-A- 1 418 370
- WO-A1-85/00211
- DE-A1- 3 904 059
- DE-A1- 10 353 305
- DE-U- 1 880 995
- US-A- 2 149 147
- US-A- 4 575 104
- US-A- 5 244 215

## Beschreibung

### Technisches Gebiet

Die Erfindung betrifft eine Dichtungsanordnung, umfassend einen Dichtring, der die Oberfläche eines abzudichtenden Maschinenelements dichtend umschließt und einen abzudichtenden Raum abdichtet, wobei der Dichtring Z-förmig ausgebildet ist, umfassend einen radial einerseits angeordneten Befestigungsabschnitt und eine radial andererseits angeordnete Dichtlippe, die durch einen Verbindungssteg miteinander verbunden sind, wobei der Verbindungssteg vom Befestigungsabschnitt axial in Richtung des abzudichtenden Raums zur Dichtlippe verläuft, wobei die Dichtlippe einen ersten Dichtlippenabschnitt aufweist, der sich, ausgehend von dem Verbindungssteg, axial entgegen dem abzudichtenden Raum erstreckt und wobei die Dichtlippe einen zweiten Dichtlippenabschnitt aufweist, der sich, ausgehend von dem Verbindungssteg, axial in Richtung des abzudichtenden Raums erstreckt.

### Stand der Technik

Eine solche Dichtungsanordnung ist jeweils aus der US 5,244,215 A und WO 85/00211A1 bekannt.

Ein solcher Dichtring ist aus der DE 1880995 U bekannt. Der Dichtring ist als Wellendichtring ausgebildet und weist einen ersten Dichtlippenabschnitt auf, der zylinderförmig ausgebildet ist und an seiner inneren Mantelfläche Drallnuten besitzt. Der erste Dichtlippenabschnitt erstreckt sich im herstellungsbedingten Zustand des Dichtrings parallel zur abzudichtenden Oberfläche des abzudichtenden Maschinenelements. Dadurch soll eine Leckage bei Stillstand des abzudichtenden Maschinenelements verhindert werden. Der zweite Dichtlippenabschnitt ist als Radialwellendichtring ausgebildet und weist eine mit einer Ringwendelfeder belastete Dichtlippe auf. Der zweite Dichtlippenabschnitt schliesst im herstellungsbedingten Zustand des Dichtrings mit der abzudichtenden Oberfläche einen in Richtung des abzudichtenden Raums entgegen der Montagerichtung des abzudichtenden Maschinenelements geschlossenen spitzen Winkel ein.

Ein weiterer Dichtring, der entsprechend ausgebildet ist, ist aus der
DE 39 04 059 A1 bekannt. Der Verbindungssteg ist C-förmig ausgebildet, wobei der erste Dichtlippenabschnitt mehrere dynamisch beanspruchte Dichtkanten umfasst, die durch eine Ringwendelfeder an die abzudichtende Oberfläche angedrückt werden. Der zweite Dichtlippenabschnitt ist durch einen ringförmigen Vorsprung gebildet, der axial gestaucht einen in axialer Richtung relativ beweglichen Radialflansch dichtend berührt.

Ein weiterer Dichtring und eine Dichtungsanordnung, die einen solchen Dichtring umfasst, sind aus der DE 103 53 305 A1 bekannt. Der Dichtring hat einen an einem ersten Maschinenteil gehaltenen Befestigungsabschnitt und eine Dichtlippe, die bei montiertem Dichtring an einem zweiten Maschinenteil dichtend anliegt und zur Luftseite hin gebogen ist. Um den Dichtring so auszubilden, dass die Dichtlippe auch bei einem höheren Druck innerhalb des abzudichtenden Raums zuverlässig abdichtet und nicht von der abzudichtenden Fläche abhebt, ist der Dichtring durch den Druck innerhalb des abzudichtenden Raums in Richtung auf das abzudichtende Maschinenelement belastet.
Mit zunehmendem Mediumsdruck innerhalb des abzudichtenden Raums wird die Dichtlippe entsprechend fest gegen die abzudichtende Oberfläche des abzudichtenden Maschinenelements gepresst, wodurch gewährleistet ist, dass der Radialwellendichtring nicht von der abzudichtenden Oberfläche abhebt. Der vorbekannte Dichtring kann als Radialwellendichtring, Kolben- oder Stangendichtring verwendet werden. Die Dichtlippe des vorbekannten Dichtrings ist außerdem in radialer Richtung flexibel. Der vorbekannte Dichtring besteht vorzugsweise aus Polytetrafluorethylen oder kann aus einem anderen geeigneten Dichtungswerkstoff hergestellt sein.

Aus der US 4575104 A ist ein weiterer Dichtring bekannt, durch den die Aufgabe gelöst werden soll, dass sich die Dichtlippe bei Montage des abzudichtenden Maschinenelements nicht in Montagerichtung umlegt. Dazu ist ein Radialwellendichtring vorgesehen, der eine dynamisch beanspruchte erste Dichtlippe aufweist und eine dazu mit axialem Abstand benachbart angeordnete Staublippe, wobei die Dichtlippe und die Staublippe am Radialschenkel eines L-förmigen Stützkörpers befestigt sind.

### Darstellung der Erfindung

Der Erfindung liegt die Aufgabe zugrunde, eine Dichtungsanordnung der vorbekannten Art derart weiterzuentwickeln, dass die Montage des Dichtrings weiter vereinfacht wird, insbesondere dass ein Umkippen der Dichtlippe bei der Montage und bei Beaufschlagung der Dichtlippe mit Überdruck zuverlässig vermieden wird. Außerdem soll der Dichtring reibungsarm betrieben werden können.

Diese Aufgabe wird erfindungsgemäß durch eine Dichtungsanordnung gemäß Anspruch 1 gelöst. Auf vorteilhafte Ausgestaltungen nehmen die jeweiligen Unteransprüche Bezug.

Zur Lösung der Aufgabe ist eine Dichtungsanordnung vorgesehen, wobei der erste und der zweite Dichtlippenabschnitt übereinstimmend dick ausgebildet sind und ohne radialen Versatz ineinander übergehen, wobei die Dichtlippe im herstellungsbedingten Zustand des Dichtrings mit der abzudichtenden Oberfläche, die sich parallel zu einer Symmetrieachse erstreckt, die gleichzeitig die Rotationsachse des abzudichtenden Maschinenelements bildet, einen in Richtung des abzudichtenden Raums entgegen der Montagerichtung des abzudichtenden Maschinenelements offenen spitzen Winkel einschließt und nach der Montage des Dichtrings die Dichtlippe sich axial und parallel zur abzudichtenden Oberfläche erstreckt, wobei der Dichtring, während der bestimmungsgemäßen Verwendung, die abzudichtende Oberfläche unter radialer elastischer Vorspannung nur mit seinem ersten Dichtlippenabschnitt dichtend berührt, wobei der erste Dichtlippenabschnitt auf der der abzudichtenden Oberfläche radial zugewandten Seite einen Rückförderdrall aufweist und wobei der zweite Dichtlippenabschnitt der abzudichtenden Oberfläche mit radialem Abstand benachbart zugeordnet ist und wobei der durch den Abstand gebildete Spalt von kapillaraktiver Enge ist.

Durch die vom Verbindungssteg ausgehende axiale Verlängerung der Dichtlippe in Form des zweiten Dichtlippenabschnitts, entgegen dem ersten Dichtlippenabschnitt, ist die Gefahr des Umkippens der Dichtlippe während der Montage oder bei Beaufschlagung der Dichtlippe mit Überdruck aus dem abzudichtenden Raum praktisch ausgeschlossen. Der zweite Dichtlippenabschnitt kann unter normalen Betriebsbedingungen nicht axial unter dem Befestigungsabschnitt hindurch in Richtung Luftseite ausweichen, weil dazu eine zu große Kraft zur Verformung des Verbindungsstegs nötig wäre. Bei einem hohen Überdruck im abzudichtenden Raum oder bei der Montage wird ein Drehmoment auf die Dichtlippe ausgeübt, axial entgegen dem abzudichtenden Raum, und der zweite Dichtlippenabschnitt legt sich zur Abstützung der Dichtlippe und um ein axiales Umkippen in Richtung Luftseite zu verhindern, an der abzudichtenden Oberfläche des abzudichtenden Maschinenelements an.

Die abzudichtende Oberfläche eines abzudichtenden Maschinenelements wird während der bestimmungsgemäßen Verwendung nur vom ersten Dichtlippenabschnitt unter radial elastischer Vorspannung dichtend berührt. Der zweite Dichtlippenabschnitt ist als Stützkörper ausgebildet und berührt unter normalen Betriebsbedingungen die abzudichtende Oberfläche während der bestimmungsgemäßen Verwendung des Dichtrings nicht. Hierbei ist von Vorteil, dass der erfindungsgemäße Dichtring reibungsarm betrieben werden kann.

Bevorzugt beträgt das Verhältnis aus axialer Länge des ersten Dichtlippenabschnitts zu axialer Länge des zweiten Dichtlippenabschnitts 1 bis 3, besonders bevorzugt 2. Bei gängigen Abmessungen des Dichtrings weist der zweite Dichtlippenabschnitt eine axiale Länge auf, die etwa 0,8mm bis 1,4mm beträgt. Die axiale Länge wird dabei ausgehend vom Verbindungssteg bis zur axialen Stirnseite des zweiten Dichtlippenabschnitts gemessen, der dem abzudichtenden Raum axial zugewandt ist.

Der Befestigungsabschnitt und der Verbindungssteg sind durch einen gelenkartig ausgebildeten Übergangsbereich miteinander verbunden. Um diesen gelenkartig ausgebildeten Übergangsbereich sind Dichtlippe und Verbindungssteg bei radialen Auslenkbewegungen des abzudichtenden Maschinenelements und/oder bei Überdruckbeaufschlagung des Dichtrings aus dem abzudichtenden Raum schwenkbar. Durch die im Wesentlichen Z-förmige Ausgestaltung des Dichtrings kann dieser vergleichsweise großen radialen Auslenkbewegungen der abzudichtenden Welle folgen, ohne dass Undichtigkeiten zwischen der Dichtlippe und der abzudichtenden Fläche entstehen.

Bevorzugt weist nur der erste Dichtlippenabschnitt auf der der abzudichtenden Oberfläche zugewandten Seite einen Rückförderdrall für das abzudichtende Medium in Richtung des abzudichtenden Raums auf. Die abzudichtende Oberfläche eines abzudichtenden Maschinenelements wird während der bestimmungsgemäßen Verwendung nur vom ersten Dichtlippenabschnitt unter radial elastischer Vorspannung dichtend berührt. Der zweite Dichtlippenabschnitt ist als Stützkörper ausgebildet und berührt unter normalen Betriebsbedingungen die abzudichtende Oberfläche während der bestimmungsgemäßen Verwendung des Dichtrings nicht. Hierbei ist von Vorteil, dass der erfindungsgemäße Dichtring reibungsarm betrieben werden kann.

Das abzudichtende Medium, das sich unter dem ersten Dichtlippenabschnitt befindet und für dessen reibungsarmen Lauf auf der abzudichtenden Oberfläche und daraus resultierend für einen nur geringen Verschleiß sorgt, wird durch den Rückförderdrall in Richtung des abzudichtenden Raums zurückgepumpt.

Der erste und der zweite Dichtlippenabschnitt weisen eine im Wesentlichen übereinstimmende radiale Dicke auf und sind während der bestimmungsgemäßen Verwendung des Dichtrings ohne radialen Versatz axial ineinander übergehend ausgebildet. Durch die weitgehend konstanten Dicken ist der Dichtring einfach zu fertigen, weil durch unterschiedliche Dicken bedingte Materialanhäufungen vermieden werden.

Der Verbindungssteg und die Dichtlippe können aus Polytetrafluorethylen oder einem anderen geeigneten Dichtungswerkstoff bestehen.

Der in Richtung des abzudichtenden Raums entgegen der Montagerichtung des abzudichtenden Maschinenelements offene spitze Winkel, den die Dichtlippe im herstellungsbedingten Zustand des Dichtrings mit der abzudichtenden Oberfläche einschließt, beträgt bevorzugt 45°.

Dies ist im Hinblick auf eine einfache Montage von Vorteil. Durch den genannten spitzen Winkel wird die Gefahr einer Beschädigung des Dichtrings, insbesondere der Dichtlippe, während der Montage auf ein Minimum reduziert. Durch die spitzwinklige Anordnung der Dichtlippe fällt es leicht, den Dichtring zu montieren, beispielsweise den Dichtring auf eine abzudichtende Welle aufzufädeln. Nach der Montage des Dichtrings erstreckt sich die Dichtlippe axial und parallel zur abzudichtenden Oberfläche.

Wie bereits zuvor ausgeführt, berührt der zweite Dichtlippenabschnitt die abzudichtende Oberfläche während der bestimmungsgemäßen Verwendung im normalen Betrieb des Dichtrings nicht. Der zweite Dichtlippenabschnitt ist der abzudichtenden Oberfläche mit radialem Abstand benachbart zugeordnet, wobei der durch den Abstand gebildete Spalt von kapillaraktiver Enge ist. Die statische Abdichtung des Dichtrings bei Prüfdruck ist durch eine solche Ausgestaltung auch dann gut, wenn der Rückförderdrall zur Luftseite hin nicht durch einen Steg zerschossen ist. In jedem Fall wird durch den Spalt eine reibungsarme Relativbeweglichkeit des Dichtrings auf der abzudichtenden Oberfläche sichergestellt.

### Kurzbeschreibung der Zeichnung

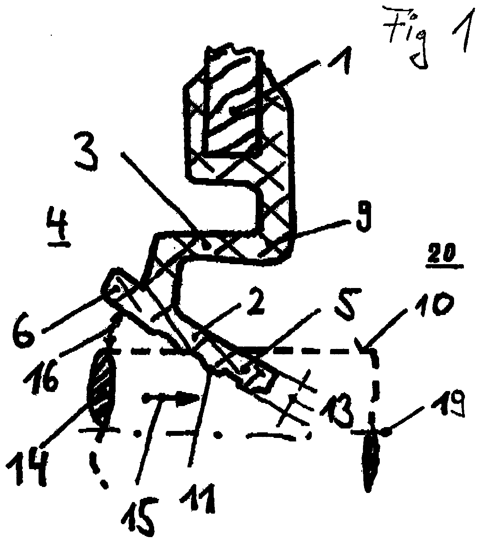

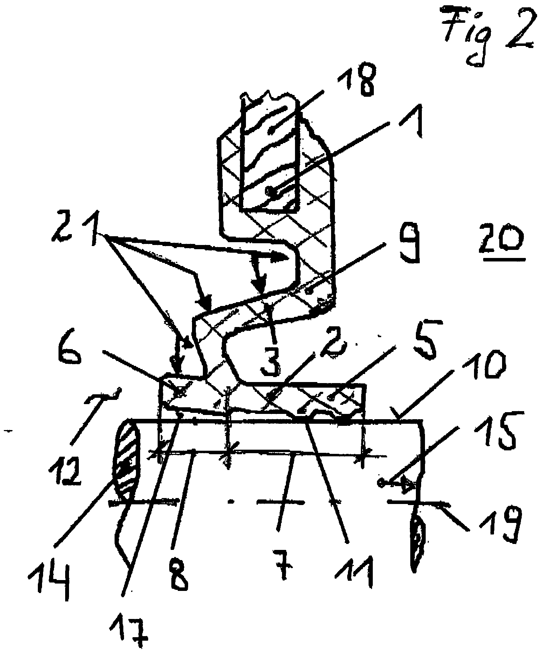

Ein Ausführungsbeispiel einer erfindungsgemäßen Dichtungsanordnung mit einem erfindungsgemäßen Dichtring wird nachfolgend anhand der Figuren 1 und 2 näher beschrieben.

Diese zeigen jeweils in schematischer Darstellung:
- Fig. 1: den Dichtring in seiner herstellungsbedingten Form vor der Montage,
- Fig. 2: eine Dichtungsanordnung, bei der der Dichtring während seiner bestimmungsgemäßen Verwendung gezeigt ist,
- Fig. 3 und 4: jeweils ein Detail des erfindungsgemäßen Dichtrings.

In Fig. 1 ist ein Ausführungsbeispiel des erfindungsgemäßen Dichtrings in seinem herstellungsbedingten Zustand gezeigt. Zur Verdeutlichung ist das abzudichtende Maschinenelement 14, hier eine abzudichtende Welle, in gestrichelter Darstellung gezeigt.

Der Befestigungsabschnitt 1 ist in dem hier gezeigten Ausführungsbeispiel mit einem Stützkörper 18 aus einem zähharten Werkstoff versteift.
Der Verbindungssteg 3 erstreckt sich im Wesentlichen parallel zur Symmetrieachse 19, die gleichzeitig die Rotationsachse des abzudichtenden Maschinenelements 14 bildet.
Die Dichtlippe 2 besteht aus dem ersten Dichtlippenabschnitt 5 und dem zweiten Dichtlippenabschnitt 6, die auf ihren einander zugewandten Seiten durch den Verbindungssteg 3 miteinander verbunden sind.

Die Dichtlippe 2 bildet mit der abzudichtenden Oberfläche 10, die sich parallel zur Symmetrieachse 19 erstreckt, einen in Richtung des abzudichtenden Raums 4 offenen spitzen Winkel 16, der im hier dargestellten Ausführungsbeispiel zwischen 30° und 45° beträgt. Der größte Durchmesser der winklig angestellten Dichtlippe 2, nämlich der Durchmesser der Stirnseite des zweiten Dichtlippenabschnitts 6, der dem abzudichtenden Raum 4 axial zugewandt ist, ist deutlich größer als der Durchmesser der abzudichtenden Oberfläche 10, so dass eine Montage der Welle in Montagerichtung 15 problemlos erfolgen kann und die Gefahr einer Beschädigung der Dichtlippe 2 und/oder eines Umkippens der Dichtlippe 2 in Richtung Luftseite 20 auf ein Minimum reduziert ist.

In Fig. 2 ist ein Ausführungsbeispiel einer Dichtungsanordnung mit dem erfindungsgemäßen Dichtring aus Fig. 1 gezeigt. Der Dichtring ist im Wesentlichen Z-förmig ausgebildet, wobei der radial außenseitig angeordnete Befestigungsabschnitt 1 und die radial innenseitig angeordnete Dichtlippe 2 durch den Verbindungssteg 3 miteinander verbunden sind. Der Verbindungssteg 3 verläuft vom Befestigungsabschnitt 1 axial in Richtung des abzudichtenden Raums 4 zur Dichtlippe 2, wobei die Dichtlippe 2, ausgehend vom Verbindungssteg 3, in einen sich axial in Richtung Luftseite 20 erstreckenden ersten Dichtlippenabschnitt 5 und einen sich axial in Richtung des abzudichtenden Raums 4 erstreckenden zweiten Dichtlippenabschnitt 6 unterteilt ist. Die beiden Dichtlippenabschnitt 5, 6 sind einstückig ineinander übergehend und materialeinheitlich mit dem Verbindungssteg 3 ausgebildet, wobei das Verhältnis aus der axialen Länge 7 des ersten Dichtlippenabschnitts 5 zur axialen Länge 8 des zweiten Dichtlippenabschnitts 6 in diesem Ausführungsbeispiel 2 beträgt.

Bei radialen Auslenkbewegungen des Befestigungsabschnitts 1 des Dichtrings relativ zum abzudichtenden Maschinenelement 14 bewegt sich die Dichtlippe 2 bogenförmig um den gelenkartig ausgebildeten Übergangsbereich 9, der den Befestigungsabschnitt 1 und den Verbindungssteg 3 miteinander verbindet.

Wie in der Zeichnung zu erkennen ist, berührt nur der erste Dichtlippenabschnitt 5 die abzudichtende Oberfläche 10, wobei der erste Dichtlippenabschnitt 5 auf der der abzudichtenden Oberfläche 10 radial zugewandten Seite einen Rückförderdrall 11 aufweist, um das in diesem Bereich befindliche abzudichtende Medium 12 während der bestimmungsgemäßen Verwendung in Richtung des abzudichtenden Raums 4 zurückzufördern. Die Richtung des Rückförderdralls 4 richtet sich dabei nach der Drehrichtung des abzudichtenden Maschinenelements 14. Generell besteht auch die Möglichkeit, dass der Rückförderdrall 11 als Wechseldrall ausgebildet ist und dadurch unabhängig von der Drehrichtung des abzudichtenden Maschinenelements 14 abdichtet.

Der erste 5 und der zweite Dichtlippenabschnitt 6 sind im hier gezeigten Ausführungsbeispiel übereinstimmend dick 13 ausgebildet und gehen ohne radialen Versatz /ohne sprunghafte Richtungsänderung ineinander über. Der zweite Dichtlippenabschnitt 6 umschließt die abzudichtende Oberfläche 10 mit radialem Abstand, wobei durch den Abstand der Spalt 17 gebildet wird. Eine Berührung zwischen der Dichtlippe 2 und der abzudichtenden Oberfläche 10 erfolgt nur im Bereich der Stege, die den Rückförderdrall 10 bilden, so dass dadurch eine reibungsarme Relativbeweglichkeit der Dichtlippe 2 auf der abzudichtenden Oberfläche 10 sichergestellt ist.

Von hervorzuhebendem Vorteil ist, dass bei überdrücken innerhalb des abzudichtenden Raums 4 nicht nur die radial äußere Oberfläche des Verbindungsstegs 3 zur Aufbringung der Kraft über die Dichtlippe auf die abzudichtende Oberfläche 10 wirksam ist, sondern auch die radiale äußere Oberfläche des zweiten Dichtlippenabschnitts 6.

Während der üblichen Druckprüfungen vor Inbetriebnahme der Dichtungsanordnung, wenn also durch Überdruckbeaufschlagung des abzudichtenden Raums 4 die korrekte Montage des Dichtrings geprüft wird, oder auch während der bestimmungsgemäßen Verwendung, wenn innerhalb des abzudichtenden Raums 4 Überdrücke / Druckspitzen auftreten, ist die Gefahr, dass die Dichtlippe 2 um den gelenkartigen Übergangsbereich 9 in Richtung Luftseite 20 umkippt, durch den zweiten Dichtlippenabschnitt 6 praktisch ausgeschlossen. Ein solcher Überdruck ist durch die Pfeile 21 dargestellt.

Der Rückförderdrall 11 ist generell als Rückförderstruktur zu verstehen.

Der Rückförderdrall 11 ist axial so begrenzt, dass unabhängig von der Lage des abzudichtenden Maschinenelements 14 ein definierter Bereich der Dichtlippe 2 zur Anlage an das Maschinenelement 14 kommt und zwischen zwei und zweieinhalb unlaufende Rillen des Rückförderdralls 11 an der abzudichtenden Oberfläche 10 anliegen.

Der Teil der Dichtlippe 2, der die abzudichtende Oberfläche 10 anliegend berührt, kann eine Feinstruktur aufweisen, die das statische Dichtverhalten dahingehend optimiert, dass eine geringere Anlegekraft benötigt wird und durch die Struktur ein redundanter Linienkontakt entsteht. Besonders bevorzugt hat die Feinstruktur eine dreieckige Ausprägung.

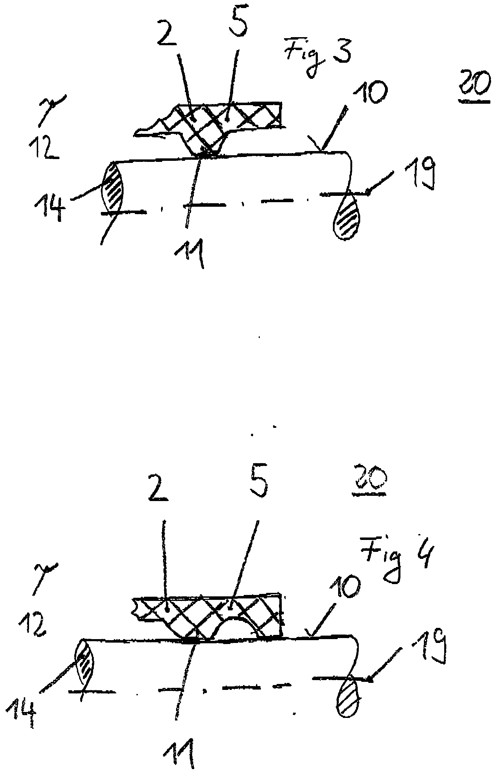

In Fig. 3 ist das der Luftseite 20 axial zugewandte Ende des ersten Dichtlippenabschnitts 5 gezeigt, wobei diese Stirnseite mit dem abzudichtenden Maschinenelement 14 einen Ringspalt begrenzt, in dem nach außen dringende Flüssigkeit gehalten wird.

In Fig. 4 ist ein weiteres Ausführungsbeispiel der in Fig. 3 gezeigten Stirnseite dargestellt, wobei das der Luftseite 20 zugewandte axiale Ende der Dichtlippe 2 einen Wulst aufweist, der die Oberfläche 10 anliegend umschließt und dadurch verhindert, dass Verunreinigungen von der Luftseite 20 in Richtung des abzudichtenden Raums 4 eindringen.

## Patentansprüche

1. Dichtungsanordnung, umfassend ein abzudichtendes Maschinenelement (14) mit einer Oberfläche (10) und einen Dichtring, der im Einbauzustand die Oberfläche (10) dichtend umschließt und einen abzudichtenden Raum (4) abdichtet, wobei der Dichtring Z-förmig ausgebildet ist, umfassend einen radial einerseits angeordneten Befestigungsabschnitt (1) und eine radial andererseits angeordnete Dichtlippe (2), die durch einen Verbindungssteg (3) miteinander verbunden sind, wobei der Verbindungssteg (3) vom Befestigungsabschnitt (1) im Einbauzustand des Dichtrings axial in Richtung des abzudichtenden Raums (4) zur Dichtlippe (2) verläuft, wobei die Dichtlippe (2) einen ersten Dichtlippenabschnitt (5) aufweist, der sich im Einbauzustand des Dichtrings, ausgehend von dem Verbindungssteg (3), axial entgegen dem abzudichtenden Raum (4) erstreckt und wobei die Dichtlippe (2) einen zweiten Dichtlippenabschnitt (6) aufweist, der sich im Einbauzustand des Dichtrings, ausgehend von dem Verbindungssteg (3), axial in Richtung des abzudichtenden Raums (4) erstreckt, **dadurch gekennzeichnet, dass** der erste (5) und der zweite Dichtlippenabschnitt (6) übereinstimmend dick (13) ausgebildet sind und ohne radialen Versatz ineinander übergehen, dass die Dichtlippe (2) im herstellungsbedingten Zustand des Dichtrings mit der abzudichtenden Oberfläche (10), die sich parallel zu einer Symmetrieachse (19) erstreckt, die gleichzeitig die Rotationsachse des abzudichtenden Maschinenelements (14) bildet, einen in Richtung des abzudichtenden Raums (4) entgegen der Montagerichtung (15) des abzudichtenden Maschiraenelements (14) offenen spitzen Winkel (16) einschließt und nach der Montage des Dichtrings die Dichtlippe (2) sich axial und parallel zur abzudichtenden Oberfläche (10) erstreckt, dass der Dichtring, während der bestimmungsgemäßen Verwendung, die abzudichtende Oberfläche (10) unter radialer elastischer Vorspannung nur mit seinem ersten Dichtlippenabschnitt (5) dichtend berührt, wobei der erste Dichtlippenabschnitt (5) auf der der abzudichtenden Oberfläche (10) radial zugewandten Seite einen Rückförderdrall (11) aufweist und dass der zweite Dichtlippenabschnitt (6) der abzudichtenden Oberfläche (10) mit radialem Abstand benachbart zugeordnet ist und dass der durch den Abstand gebildete Spalt (17) von kapillaraktiver Enge ist.

2. Dichtungsanordnung nach Anspruch 1, **dadurch gekennzeichnet, dass** das Verhältnis aus axialer Länge (7) des ersten Dichtlippenabschnitts (5) zu axialer Länge (8) des zweiten Dichtlippenabschnitts (6) 1 bis 3 beträgt.

3. Dichtungsanordnung nach Anspruch 2, **dadurch gekennzeichnet, dass** das Verhältnis 2 beträgt.

4. Dichtungsanordnung nach einem der Ansprüche 1 bis 3, **dadurch gekennzeichnet, dass** der Befestigungsabschnitt (1) und der Verbindungssteg (3) durch einen gelenkartig ausgebildeten Übergangsbereich (9) miteinander verbunden sind.

5. Dichtungsanordnung nach einem der Ansprüche 1 bis 4, dadurch gekenntzeichnet, dass nur der erste Dichtlippenabschnitt (5) auf der im Einbauzustand des Dichtrings der abzudichtenden Oberfläche (10) zugewandten Seite einen Rückförderdrall (11) für das abzudichtende Medium (12) in Richtung des abzudichtenden Raums (4) aufweist.

6. Dichtungsanordnung nach einem der Ansprüche 1 bis 5, **dadurch gekennzeichnet,**
**dass** der Verbindungssteg (3) und die Dichtlippe (2) aus einem polymeren Dichtungswerkstoff bestehen.

7. Dichtungsanordnung nach einem der Ansprüche 1 bis 6, **dadurch gekennzeichnet, dass** der Winkel (16) 45° beträgt.

## Claims

1. Seal arrangement comprising a machine element (14) to be sealed off having a surface (10), and a sealing ring which encloses the surface in a sealing manner in the installed state and seals off a space (4) to be sealed off, wherein the sealing ring is configured in a Z-shaped manner, comprising a fastening portion (1) arranged radially on one side and a sealing lip (2) arranged radially on the other side, which are connected together by a connecting web (3), wherein the connecting web (3) extends axially in the direction of the space (4) to be sealed off, from the fastening portion (1) to the sealing lip (2), in the installed state of the sealing ring, wherein the sealing lip (2) has a first sealing-lip portion (5) which extends axially away from the space (4) to be sealed off, starting from the connecting web (3), in the installed state of the sealing ring, and wherein the sealing lip (2) has a second sealing-lip portion (6) which extends axially in the direction of the space (4) to be sealed off, starting from the connecting web (3), in the installed state of the sealing ring, **characterized in that** the first sealing-lip portion (5) and the second sealing-lip portion (6) are configured with a matching thickness (13) and merge into one another without a radial offset, **in that** the sealing lip (2) encloses, in the production state of the sealing ring, an acute angle (16) that is open in direction of the space (4) to be sealed off, counter to the fitting direction (15) of the machine element (14) to be sealed off, with the surface (10) to be sealed off, which extends parallel to an axis of symmetry (19), which simultaneously forms the rotation axis of the machine element (14) to be sealed off, and after the sealing ring has been fitted, the sealing lip (2) extends axially and parallel to the surface (10) to be sealed off, **in that**, during use as intended, the sealing ring comes into sealing contact with the surface (10) to be sealed off, under radial elastic pretensioning, only with its first sealing-lip portion (5), wherein the first sealing-lip portion (5) has a return helix (11) on the side radially facing the surface (10) to be sealed off, and **in that** the second sealing-lip portion (6) is assigned to the surface (10) to be sealed off so as to be adjacent to the latter at a radial spacing therefrom, and **in that** the gap (17) formed by the spacing has a capillary-active narrowness.

2. Seal arrangement according to Claim 1, **characterized in that** the ratio of axial length (7) of the first sealing-lip portion (5) to the axial length (8) of the second sealing-lip portion (6) is 1 to 3.

3. Seal arrangement according to Claim 2, **characterized in that** the ratio is 2.

4. Seal arrangement according to one of Claims 1 to 3, **characterized in that** the fastening portion (1) and the connecting web (3) are connected together by a transition region (9) of articulated canfiguration.

5. Seal arrangement according to one of Claims 1 to 4, **characterized in that** only the first sealing-lip portion (5) has a return helix (11) for the medium (12) to be sealed off in the direction of the space (4) to be sealed off, on the side facing the surface (10) to be sealed off, in the installed state of the sealing ring.

6. Seal arrangement according to one of Claims 1 to 5, **characterized in that** the connecting web (3) and the sealing lip (2) consist of a polymeric seal material.

7. Seal arrangement according to one of Claims 1 to 6, **characterized in that** the angle (16) is 45°.

## Revendications

1. Ensemble d'étanchéité comprenant un élément de machine (14) à rendre étanche qui présente une surface (10) et une bague d'étanchéité qui, en position montée, entoure de manière hermétique la surface (10) et ferme hermétiquement un espace (4) à rendre étanche,
la bague d'étanchéité ayant la forme d'un Z et comprenant une section de fixation (1) disposée radialement d'un côté et une lèvre d'étanchéité (2) disposée radialement de l'autre côté, les deux étant reliées l'une à l'autre par une aile de liaison (3),
l'aile de liaison (3) s'étendant axialement en direction de l'espace (4) à rendre étanche depuis la section de fixation (1) jusqu'à la lèvre d'étanchéité (2) lorsque la bague d'étanchéité est en position montée,
la lèvre d'étanchéité (2) présentant lorsque la bague d'étanchéité est en position montée une première section (5) de lèvre d'étanchéité s'étendant axialement de l'aile de liaison (3) à l'espace (4) à rendre étanche,
la lèvre d'étanchéité (2) présentant lorsque la bague d'étanchéité est en position montée une deuxième section (6) de lèvre d'étanchéité s'étendant axialement entre l'aile de liaison (3) et l'espace (4) à rendre étanche,
**caractérisé en ce que**
la première section (5) et la deuxième section (6) de la lèvre d'étanchéité sont configurées à des épaisseurs (13) qui se correspondent et se prolongeant l'une dans l'autre sans décalage radial,
**en ce que** lorsque la lèvre d'étanchéité est à l'état de sortie de fabrication, la lèvre d'étanchéité (2) forme avec la surface (10) à rendre étanche, qui s'étend parallèlement à un axe de symétrie (19) et qui forme en même temps l'axe de rotation de l'élément de machine (14) à rendre étanche, un angle aigu (16) ouvert en direction de l'espace (4) à rendre étanche, en opposition à la direction de montage (15) de l'élément de machine (14) à rendre étanche et, après le montage de la bague d'étanchéité, la lèvre d'étanchéité (2) s'étend axialement et parallèlement à la surface (10) à rendre étanche,
**en ce qu'**en utilisation correcte, la bague d'étanchéité est en contact étanche avec la surface (10) à rendre étanche uniquement par sa première section (5) de lèvre d'étanchéité sous précontrainte élastique radiale,
**en ce que** sur le côté tourné radialement vers la surface (10) à rendre étanche, la première section (5) de la lèvre d'étanchéité présente une spirale de renvoi (11),
**en ce que** la deuxième section (6) de la lèvre d'étanchéité est voisine de la surface (10) à rendre étanche avec un écart radial et
**en ce que** l'interstice (17) formé par l'écart est suffisamment étroit pour avoir un effet capillaire.

2. Ensemble d'étanchéité selon la revendication 1, **caractérisé en ce que** le rapport entre la longueur axiale (7) de la première section (5) de la lèvre d'étanchéité à la longueur axiale (8) de la deuxième section (6) de la lèvre d'étanchéité est compris entre 1 et 3.

3. Ensemble d'étanchéité selon la revendication 2, **caractérisé en ce que** le rapport vaut 2.

4. Ensemble d'étanchéité selon l'une des revendications 1 à 3, **caractérisé en ce que** la section de fixation (1) et l'aile de liaison (3) sont raccordées l'une à l'autre par une partie de transition (9) configurée de manière à former une charnière.

5. Ensemble d'étanchéité selon l'une des revendications 1 à 4, **caractérisé en ce que** seule la première section (5) de la lèvre d'étanchéité présente sur le côté tourné vers la surface (10) à rendre étanche lorsque la bague d'étanchéité est en position montée une spirale (11) renvoyant le fluide (12) à rendre hermétique en direction de l'espace (4) à rendre hermétique.

6. Ensemble d'étanchéité selon l'une des revendications 1 à 5, **caractérisé en ce que** l'aile de liaison (3) et la lèvre d'étanchéité (2) sont constituées d'un matériau d'étanchéité polymère.

7. Ensemble d'étanchéité selon l'une des revendications 1 à 6, **caractérisé en ce que** l'angle (16) vaut 45°.
